(19) Europäisches Patentamt / European Patent Office / Office européen des brevets

(11) **EP 2 138 812 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(51) Int Cl.:
*G01G 23/10* *(2006.01)*     *G01G 23/37* *(2006.01)*

(21) Anmeldenummer: **08158881.6**

(22) Anmeldetag: **24.06.2008**

(54) **Verfahren zur Signalverarbeitung in einer Kraftmessvorrichtung und Kraftmessvorrichtung**

Method for processing signals in a weighing measuring device and weighing measuring device

Procédé de traitement du signal dans un dispositif de mesure de force et dispositif de mesure de force

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**30.12.2009 Patentblatt 2009/53**

(73) Patentinhaber: **Mettler-Toledo GmbH**
**8606 Greifensee (CH)**

(72) Erfinder: **Reber, Daniel**
**8322, Madetswil (CH)**

(74) Vertreter: **Mettler-Toledo**
**IP Department**
**Im Langacher 44**
**8606 Greifensee (CH)**

(56) Entgegenhaltungen:
WO-A1-2008/041490   DE-A1- 2 949 195
GB-A- 1 577 484     JP-A- 59 159 027
US-A- 3 860 802     US-A- 4 153 122
US-A- 4 347 903

**Beschreibung**

Die vorliegende Erfindung betrifft ein Verfahren zur Signalverarbeitung in einer Kraftmessvorrichtung, insbesondere in einer Waage, und eine dazu geeignete Kraftmessvorrichtung.

Ein häufig verwendeter Typ einer elektronischen Kraftmessvorrichtung weist einen mechanisch-elektrischen Messumformer auf, welcher die auf die Kraftmessvorrichtung einwirkende Kraft in ein dazu entsprechendes elektrisches Messsignal umformt. In analoger Weise erzeugt die Messumformung bei einer Waage ein elektrisches Messsignal, das der vom Wägegut ausgeübten Gewichtskraft entspricht. Im Anschluss an die Umformung wird das Messsignal an eine Anzeige oder an eine weitere Verarbeitung, beispielsweise an einen Leitrechner oder an eine Anlagensteuerung übermittelt.

Meist wird das elektrische Messsignal vor der Anzeige oder der weiteren Verarbeitung einer vorgeschalteten Signalverarbeitung in Form einer Vorverarbeitung zugeführt. In der Vorverarbeitung wird das Messsignal aufbereitet, ausgewertet und gegebenenfalls korrigiert und verstärkt.

Damit das Messsignal zur Anzeige oder weiteren Verarbeitung verwendet werden kann, wird es in der Regel in eine geeignete Form umgewandelt. Beispielsweise werden bei einer analogen Anzeige die Spannungswerte des Messsignals an den darstellbaren Bereich der Anzeige angepasst oder bei einer Digitalanzeige werden dem Messsignal digitale Ausgabewerte zugeordnet.

Im Allgemeinen kann diese Umwandlung durch eine Anzeigefunktion beschrieben werden, welche den Eingabewerten entsprechende Ausgabewerte zuordnet. Dabei werden die Werte des Messsignals als Eingabewerte der Anzeigefunktion und die Ausgabewerte der Anzeigefunktion zur Anzeige gebracht oder zur weiteren Verarbeitung weitergeleitet. Beispielsweise kann die Umwandlung des Messsignals in digitale Ausgabewerte durch eine Anzeigefunktion mit stufenförmiger Charakteristik beschrieben werden, sodass den kontinuierlichen Eingangswerten entsprechende diskrete Ausgabewerte zugeordnet werden.

Kraftmessvorrichtungen und insbesondere Waagen finden typischerweise ihren Einsatz beim Verwiegen einzelner Wägegüter aber auch in automatisierten Produktions- und Testanlagen zum Verwiegen grösserer Mengen von Wägegütern. Die Anforderungen an eine solche Kraftmessvorrichtung bestehen in einer hohen Messgenauigkeit und in einer hohen Reproduzierbarkeit der Messungen und somit in einer hohen Stabilität. Ausserdem soll die Kraftmessvorrichtung möglichst einfach und kostengünstig aufgebaut sein.

Besonders bei einer hohen Messgenauigkeit ist bekannt, dass kleinste Störungen des Messsignals zu erheblichen Instabilitäten der Ausgabewerte führen können. Diese Instabilitäten führen bei der Anzeige zu häufigen, schnellen Veränderungen der angezeigten Werte, zu sogenannten Anzeigefluktuationen. Durch die Anzeigefluktuationen wird das korrekte Ablesen dieser Werte, insbesondere deren niederwertigster Stellen oder deren feinster Skaleneinteilungen, erschwert oder gar verunmöglicht wird. Ausserdem können diese Instabilitäten zu Problemen wie Ungenauigkeiten in der weitere Verarbeitung führen.

Um diese Probleme zu lösen sind aus dem Stand der Technik verschiedene Verfahren bekannt. Beispielsweise offenbart US3826319 eine Waage mit einer digitalen Anzeige, bei der die niederwertigsten Stellen nach einem Lastwechsel unterdrückt und anschliessend sukzessiv wieder zur Anzeige gebracht werden. Allerdings führt die Unterdrückung der Anzeigestellen zu Verlusten der Genauigkeit sodass diese Methode bei hohen Genauigkeitsanforderungen nicht geeignet ist.

Genauigkeitsverluste können zu einem gewissen Grad durch Auswerteverfahren vermieden werden, bei denen durch eine Mittelwertbildung des Messsignals eine Stabilisierung der Anzeige erreicht wird. Allerdings wird durch die Mittelwertbildung die Reaktionszeit der Kraftmessvorrichtung auf Laständerungen, die sogenannte Folgefähigkeit, verschlechtert und somit die Messdauer verlängert.

Um eine schnelle Reaktionszeit trotz Mittelwertbildung zu erhalten sind aus dem Stand der Technik verschiedene Methoden bekannt. Beispielsweise offenbart DE102005021547 eine vorübergehende Unterbrechung der Mittelwert-Berechnung bei einer Laständerung um den Laständerungen schneller folgen zu können. Allerdings erfordert dieses Verfahren einen relativ hohen Schaltungsaufwand.

Weiterer Stand der Technik ist durch die Dokumente US4153122 und DE2949195 gegeben.

Der vorliegenden Erfindung liegt daher die Aufgabe zugrunde, ein Verfahren zur Signalverarbeitung einer Kraftmessvorrichtung, insbesondere einer Waage, und eine geeignete Kraftmessvorrichtung anzugeben, welche hohen Anforderungen genügt, sowohl bezüglich Messgenauigkeit, Stabilität und Reaktionszeit als auch bezüglich einfachem und kostengünstigem Aufbau und Betrieb.

Diese Aufgabe wird mit einem Verfahren zur Signalverarbeitung, einer geeigneten Kraftmessvorrichtung und einem Rechenprogramm gelöst, welche die in den unabhängigen Ansprüchen angegebenen Merkmale aufweisen. Vorteilhafte Ausgestaltungen der Erfindung sind in den weiteren, abhängigen Ansprüchen angegeben.

Die Erfindung betrifft ein Verfahren, eine Vorrichtung und ein Rechenprogramm zur Signalverarbeitung in einer elektronischen Kraftmessvorrichtung, insbesondere einer Waage, mit einem Messumformer welcher ein zu einer einwirkenden Kraft korrespondierendes Messsignal bildet, welches, gegebenenfalls via einer Vorverarbeitung, einer Anzeigefunktion zugeführt wird, welche den Werten des Messsignals entsprechende Ausgabewerte zuordnet, welche dann zur Anzeige gebracht oder zur weiteren Verarbeitung weitergeleitet werden. Dabei weist der Eingabebereich der Anzeigefunktion einen Fangbereich auf, sodass den im Fangbereich liegenden Werten des Messsignals durch die Anzeigefunktion ein gemeinsamer Ausgabewert zugewiesen wird, und die Position des Fangbereichs wird innerhalb des Eingabebereichs in Abhängigkeit des Messsignals gesteuert. Dadurch können Störeinflüsse wirkungsvoll unterdrückt und Fluktuationen in der Anzeige vermieden werden ohne das die Messgenauigkeit, die Stabilität oder die Reaktionszeit der Kraftmessvorrichtung beeinträchtigt wird.

Überraschenderweise kann auch unter schwierigen Bedingungen, insbesondere bei niederfrequenten Störungen, eine stabile Anzeige erreicht werden. Während hochfrequente Störungen und Schwingungen mit bekannten Methoden auf relativ einfache Weise gefiltert werden können, ermöglicht die erfindungsgemässe Methode eine Unterdrückung von niederfrequenten Störungen und Schwingungen. Dabei sind die niederfrequenten Störungen und Schwingungen im Verhältnis zur typischen Messdauer zu verstehen, beispielsweise bei einer Messdauer im Bereich von einer oder einigen Sekunden können niederfrequente Schwingungen typischerweise eine Periodendauer von einigen Sekunden bis einigen Minuten aufweisen.

Die erfindungsgemässen Vorteile ergeben sich vor allem für eine digitale Anzeige; die Erfindung kann aber auch bei einer analogen Anzeige eingesetzt werden. Durch diese universellen Einsatzmöglichkeiten ergeben sich Vorteile bezüglich der Kosten, Stabilität und Betrieb bei sehr verschiedenartigen Typen von Kraftmessvorrichtungen.

Der Fangbereich ist dadurch charakterisiert, dass den im diesem Bereich liegenden Werten des Messsignals ein gemeinsamer Ausgabewert zugewiesen wird. Dies entspricht im mathematischen Sinn einer surjektiven Abbildung der Menge der Werte des Fangbereichs auf eine Zielmenge mit einem Element, nämlich dem gemeinsamen Ausgabewert, welcher damit unabhängig von den einzelnen Werten des Messsignals ist, solange diese innerhalb des Fangbereichs liegen.

Durch diese Charakteristik werden, bei geeigneter Wahl der Grösse des Fanbereichs, sehr robuste und stabile Ausgabewerte erreicht. Dieser Vorteil bringt eine wesentliche Verbesserung gegenüber den bekannten Methoden der Mittelwertbildung, bei welchen sich durch die Verrechnung der aktuellen Messwerte stets gewisse Fluktuationen der Ausgabewerte ergeben.

Vorzugsweise wird die Anzeigefunktion mittels einer Anzeigeverarbeitungseinheit realisiert. Deren Ausgang ist mit einer Anzeigeeinheit und/oder einer weiteren Verarbeitungseinheit verbindbar um die mittels der Anzeigefunktion ermittelten Ausgabewerte an diese weiterzuleiten. Dabei werden unter dem Begriff der Anzeigeverarbeitungseinheit alle signalverarbeitenden Elemente wie Schaltkreise, Analogschaltungen, Analog-Digital-Wandler, integrierte Schaltkreise, Operationsverstärker, Schieberegister, Prozessoren, Computer, Recheneinheit und dergleichen verstanden.

In einer bevorzugten Ausgestaltung der Erfindung wird der gemeinsame Ausgabewert vorbestimmt, insbesondere bezüglich eines vorbestimmten Startwerts und/oder des Verlaufs des Messsignals während eines früheren Zeitintervalls. Dadurch können kurzfristige Schwankungen des Messsignals und demzufolge momentane Anzeigefluktuationen wirkungsvoll unterdrückt werden.

In einer vorteilhaften Ausgestaltung der Erfindung ist der Fangbereich durch eine erste Grenze und eine zweite Grenze vom Eingabebereich abgegrenzt und der Abstand der Grenzen wird bei der Steuerung des Fangbereichs im Wesentlichen konstant gehalten. Dadurch kann die Steuerung des Fangbereichs auf die Steuerung eines Parameters, nämlich auf die Steuerung eines einzelnen Positionsparameters, reduziert und somit eine besonders einfache Steuerung erreicht werden.

In einer weiteren vorteilhaften Ausgestaltung der Erfindung ist der Fangbereich grösser als die zu erwartenden Fluktuationen des Messsignals und/oder die Auflösung der Anzeige und/oder die Verarbeitungsgenauigkeit der weiteren Verarbeitung. Vorzugsweise ist der Fangbereich grösser als die doppelte, insbesondere dreifache oder vierfache, Varianz des Messsignals. Dadurch können Fluktuationen in der Anzeige auf ein Minimum reduziert werden oder deren Auftreten auf sehr kleine Wahrscheinlichkeiten eingeschränkt werden.

In einer weiteren Ausgestaltung der Erfindung weist der Fangbereich einen Kennwert, insbesondere einen Mittenwert des Fangbereichs auf, welcher die Position des Fangbereichs charakterisiert und welcher in Abhängigkeit des Messsignals gesteuert wird. Dadurch kann die Steuerung des Fangbereichs auf einfache Weise anhand des Kennwerts durchgeführt werden.

In einem weiteren Ausgestaltungsbeispiel wird der Fangbereich schrittweise, insbesondere mit konstanter Schrittweite entsprechend einem ersten Korrekturparameter gesteuert. Dadurch werden die Anzeigewerte nicht kontinuierlich verändert sondern nur zu bestimmten Zeitpunkten, sodass kurzzeitige Anzeigefluktuationen wirkungsvoll vermieden werden.

In einer bevorzugten Ausgestaltung der Erfindung wird ein zum Messsignal korrespondierender Wert gebildet, dieser mit einem Schwellwert vergleichen und in Abhängigkeit davon die Positionierung des Fangbereichs ausgelöst. Dadurch wird eine schrittweise, im Wesentlichen gleichmässig fortschreitende Änderung des Fangbereichs erreicht. Ferner kann die Anzeige Laständerungen in geeigneter Weise folgen während Störungen, deren Integralwerte unterhalb des Schwellwerts bleiben, wirkungsvoll unterdrückt werden.

In einer weiteren bevorzugten Ausgestaltung wird eine Differenz zwischen dem Messsignal und dem Ausgabewert gebildet und diese Differenz wird zu einem Integralwert integriert, anhand dessen die Position des Fangbereichs gesteuert wird. Da bei grossen Änderungen des Messsignals auch der Integralwert sich entsprechend rasch ändert, kann trotz der hohen Genauigkeit eine kurze Reaktionszeit der Kraftmessvorrichtung bezüglich Laständerungen erreicht werden.

In einer weiteren Ausgestaltung der Erfindung wird der Integralwert schrittweise, insbesondere mit konstanter Schrittweite entsprechend einem zweiten Korrekturparameter, korrespondierend zu Positionsänderungen des Fangbereichs (DSL) verändert. Durch diese schrittweise Anpassung kann ein fortlaufendes Aufsummieren des Integrators auf einfache Weise entsprechend der neuen Situation angepasst werden.

In einer besonders bevorzugten Ausgestaltung der Erfindung wird der Integralwert so verändert, dass der Betrag des veränderten Integralwerts grösser als Null ist. Dadurch wird der Integrator nie vollständig zurückgesetzt, sondern es bleiben stets gewisse Informationen beziehungsweise Signalanteile über die vorangehende Integration erhalten. Das äussert sich dann darin, dass Veränderung der Anzeige in eine gegenläufige Richtung erst nach einer grösseren Änderung des Messsignals auftreten. Beispielsweise müssen nach einem Überschreiten des positiven Schwellwerts die Werte des Messsignals zuerst den ganzen Fangbereich durchlaufen bis sie den negativen Schwellwert erreichen.

Diese Charakteristik führt zu einem sogenannten Hysterese-Effekt, indem jeder Ausgabewert inhärent eine gewisse Vorgeschichte enthält und somit dieser Ausgabewert stets davon abhängt, aus welcher Richtung der Ausgabewert erreicht wurde. Durch diesen Hysterese-Effekt können kurzzeitige Fluktuationen weiter reduziert und dementsprechend eine sehr robuste Anzeige erreicht werden.

Durch geeignete Wahl des Korrekturparameters und damit der Schrittweite der Änderungen des Integralwerts kann eine Verbesserung der Robustheit der Anzeige signifikant, beispielsweise um einen Faktor drei, erreicht werden, ohne dass eine Ansprechverzögerung entsteht.

Des Weiteren weist eine bevorzugte Ausgestaltung der Erfindung ein Programm auf, welches auf einer Signalverarbeitungseinheit, insbesondere einer Anzeigeverarbeitungseinheit oder einer Recheneinheit, ausführbar ist und welches zur Berechnung eines Ausgabewerts nach dem erfindungsgemässen Verfahren dient. Dadurch kann ein hoher Grad an Flexibilität und eine Integration weiterer Funktionalitäten bei der Signalverarbeitung erreicht werden.

In einer weiteren Ausgestaltung wird die Position des Fangbereichs im Wesentlichen gleichzeitig mit einer Anpassung des Integralwerts gesteuert. Dadurch kann eine ummittelbares Fortsetzen der Integration und damit eine schnelle Reaktionszeit der Kraftmessvorrichtung erreicht werden.

In einer weiteren Ausgestaltung bildet der Integrator einen einer positiven Differenz entsprechenden Integralwert und einen einer negativen Differenz entsprechenden Integralwert, anhand welcher dann die Position des Fangbereichs gesteuert wird, insbesondere in jeweils entgegen gesetzte Richtungen gesteuert wird. Dadurch kann die Integration auf einfache Weise durchgeführt werden.

Vorzugsweise wird durch den Integrator eine Hilfsgrösse integriert, welche ein den Messwerten des Messsignals entgegen gesetztes Vorzeichen aufweist. Dadurch kann die Robustheit der Integration zusätzlich verbessert werden.

Ein Messsignal, welches typischerweise in analoger Form vorliegt, wird vorzugsweise mit einer Analog-Digital-Wandlung in digitale Werte gewandelt und als digitale Eingabewerte der Anzeigefunktion zugeleitet. Dabei korrespondieren die digitalen Werte zum analogen Messsignal und damit zur auf die Kraftmessvorrichtung einwirkenden Kraft. Die von der Anzeigefunktion erzeugten Ausgangswerte liegen dann in der Regel ebenfalls als digitale Information, beispielsweise als Zahlenwert, vor.

Einzelheiten der erfindungsgemässen Kraftmessvorrichtung, des erfindungsgemässen Kraftmessmoduls und des erfindungsgemässen Verfahrens ergeben sich anhand der Beschreibung der in den Zeichnungen dargestellten Ausführungsbeispiele. Es zeigen:

Fig. 1     eine erfindungsgemässe Waage 1 in beispielhafter Ausgestaltung mit einer symbolisch dargestellter Last L und einer Anzeigeeinheit 31;

Fig. 2     in beispielhafter Darstellung ein Blockschaltbild der Waage 1 gemäss Figur 1, mit einem Messumformer 10, welche mit einer Anzeigeverarbeitungseinheit 30 verbunden ist, sodass mittels einer Anzeigefunktion $F_A(SL)$ ein Ausgabewert A berechnet wird, welcher dann an eine analoge Anzeigeeinheit 31a, eine digitale Anzeigeeinheit 31b und eine weitere Verarbeitungseinheit 32 weitergeleitet wird;

Fig. 3     in beispielhafter Darstellung den Graph einer Anzeigefunktion $F_A(SL)$ gemäss Figur 2, welche die im Eingabebereich liegenden Werte des Messsignals SL einem Ausgabewert A zugeordnet und mit einem Fangbereich DSL, welcher die Werte des Messsignals SL einem gemeinsamen Ausgabewert A* zugeordnet;

Fig. 4     ein beispielhaftes Blockschema einer Steuereinheit für eine Anzeigeverarbeitungseinheit 30 gemäss Figur 2 mit der Anzeigefunktion $F_A$(SL), einem Integrator INT und einem Trigger TRIG zur Einspeisung von Korrekturwerten k1, k2;

Fig. 5 ein weiteres Ausführungsbeispiel der Steuereinheit gemäss Figur 4, jedoch mit einer Trennung der Steuereinheit für positive und negative Messwerte des Messsignals LS;

Fig. 6 einen beispielhaften, vereinfachten zeitlichen Verlauf des Messsignals SL mit den Grenzen des Fangbereichs DSL, des zugehörigen Verlaufs des gemeinsamen Ausgabewerts A* und des zugehörigen Verlaufs des Integralwerts I des Integrators INT.

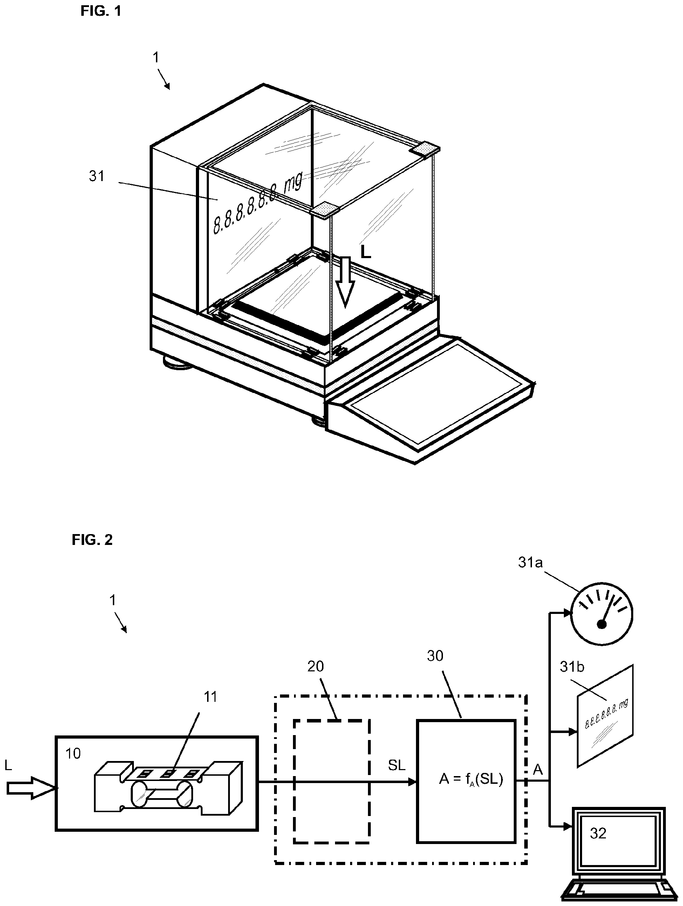

Figur 1 zeigt eine erfindungsgemässe Waage 1 in beispielhafter Ausgestaltung mit symbolisch dargestellten Einwirkungen einer Last L und einer Anzeigeeinheit 31. Aufgabe der in der Waage 1 vorgesehenen Anzeigeverarbeitungseinheit ist es, einen genauen und stabilen Ausgabewert A auf der Anzeigeeinheit 31, beispielsweise einer digitalen Flüssigkristallanzeige, zu erreichen.

Figur 2 zeigt in beispielhafter Darstellung das Blockschaltbild der in Figur 1 gezeigten Waage 1. Der Messumformer 10, in diesem Fall basierend auf dem Prinzip der Deformation eines Dehnmessstreifens 11, erzeugt ein Messsignal, welches zu der auf den Messumformer 10 einwirkenden Kraft L korrespondiert. Der Messumformer 10 ist, gegebenenfalls über eine Vorverarbeitungseinheit 20, mit der Anzeigeverarbeitungseinheit 30 verbunden um das Messsignal SL an diese weiterzuleiten. Wie in der Zeichnung angedeutet kann die Anzeigeverarbeitungseinheit 30 auch in die Vorverarbeitungseinheit 20 integriert sein, zum Beispiel als gemeinsame Schaltung, als Teil eines Rechenprogramms in einem Mikroprozessor oder als Baugruppe. Die Vorverarbeitungseinheit 20 oder die Vorverarbeitungsfunktionen könnten aber auch durch den Messumformer 10 übernommen werden, sodass das vom Messumformer erzeugte Messsignal keiner weiteren Vorverarbeitung bedarf.

Als Messumformer 10 können die verschiedensten Typen zum Einsatz kommen, beispielsweise Messumformer 10 welche auf dem Prinzip der Kraftkompensation oder Messumformer 10 welche allgemein auf der Deformation von Deformationskörpern, beispielsweise Schwenklaststützen (Rocker-Pins), basieren.

In der Anzeigeverarbeitungseinheit 30 wird das Messsignal SL zu Ausgabewerten A verarbeitet. Der Ausgang der Anzeigeverarbeitungseinheit 30 ist mit einer Anzeigeeinheit 31, beispielsweise einer digitalen Flüssigkristallanzeige 31a oder einem analogen Zeigerinstrument 31 b, verbunden, sodass die Ausgabewerte A an diese weitergeleitet und angezeigt werden können. Die Ausgabewerte A können auch an eine weitere Verarbeitungseinheit 32, beispielsweise an eine Überwachungs- und/oder eine Alarmierungsvorrichtung und/oder an einen Leitrechner und/oder an eine Prozesssteuerung weitergeleitet werden.

In der Anzeigeverarbeitungseinheit 30 werden die Werte des Messsignals SL als Eingabewerte einer Anzeigefunktion $F_A$ zugeführt. Durch diese Anzeigefunktion $F_A$ werden dann den Werten des Messsignals SL entsprechende Ausgabewerte A zuordnet. Diese Rechenoperation kann auf allgemeine Weise als Anzeigefunktion $F_A$ des Ausgabewerts A bezüglich des Messsignals SL dargestellt werden:

$$A = F_A(SL).$$

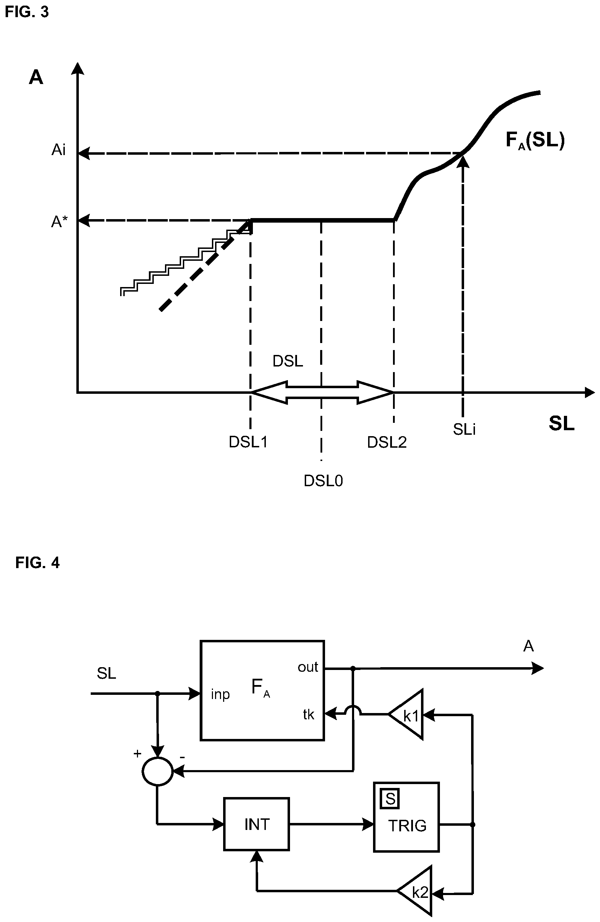

Figur 3 zeigt in beispielhafter Darstellung den Graph einer Anzeigefunktion $F_A$(SL) gemäss Figur 2. Der Bereich der Eingabewerte, der sogenannte Eingabebereich der Anzeigefunktion $F_A$(SL), ist durch die Abszisse (x-Achse) und der Bereich der Ausgabewerte ist durch die Ordinate (y-Achse) dargestellt. Einem durch das Messsignal SL erzeugten allgemeinen Eingabewert SLi wird durch die Anzeigefunktion $F_A$(SLi) ein entsprechender allgemeiner Ausgabewert Ai zugeordnet. Dabei liegen die Werte des Messsignals SL normalerweise ihm Eingabebereich der Anzeigefunktion $F_A$(SL). Somit ist der Eingabebereich der Anzeigefunktion $F_A$(SL) der Bereich jener Eingabewerte, denen mindestens ein Ausgabewert A zugeordnet werden kann.

Erfindungsgemäß weist der Eingabebereich der Anzeigefunktion $F_A$(SL) einen Fangbereich DSL auf. Dieser Fangbereich DSL ist dadurch charakterisiert, dass der Graph der Anzeigefunktion $F_A$(SL) in diesem Bereich gerade und parallel zur Abszisse ausgebildet ist. Dadurch werden allen im Fangbereich DSL liegenden Werten des Messsignals SL durch die Anzeigefunktion $F_A$(SL) einem gemeinsamen Ausgabewert A* zugeordnet. Demzufolge besteht keine eineindeutige Zuordnung zwischen Eingabe- und Ausgabewerten, vielmehr wird ein ganzer Bereich von Eingabewerten auf einen einzelnen gemeinsamen Ausgabewert A* abgebildet.

Außerhalb des Fangbereichs DSL kann die Zuordnungscharakteristik der Anzeigefunktion $F_A$(SL) und damit der Verlauf des Graphen in beliebiger Form gestaltet sein, beispielsweise in Form eines monoton ansteigenden (durchgezogene Linie) oder einer linear ansteigenden (gestrichelte Linie) oder eines stufenförmigen (doppelte Linie) Funktionsverlaufs. Dabei ist ein Funktionsverlauf in Form von gleichmäßig hochaufgelösten Schritten, sogenannten Quantisierungs- oder Diskretisierungs-Schritten, ein üblicher Verlauf in der Digitaltechnik.

Des Weiteren weist der Fangbereich DSL eine erste Grenze DSL1 und eine zweite Grenze DSL2 auf, die den Fangbereich DSL gegen den ausserhalb liegenden Teil des Eingabebereichs der Anzeigefunktion $F_A(SL)$ abgrenzen.

Im Fangbereich DSL ist ein besonders ausgezeichneter Wert, nämlich ein Kennwert DSL0 bezeichnet. Diesem Kennwert DSL0 wird durch die Anzeigefunktion $F_A(SL)$ ebenfalls der gemeinsame Ausgabewert A* zugeordnet. Der Kennwert DSL0 charakterisiert in besonderer Weise die Position des Fangbereichs DSL innerhalb des Eingabebereichs. Typischerweise ist der Kennwert DSL0 der Mittenwert des Fangbereichs DSL, nämlich der Mittenwert der erste Grenze DSL1 und einer zweiten Grenze DSL2. Der Kennwert DSL0 könnte aber auch auf andere Weise die Position des Fangbereichs charakterisieren, beispielsweise als Median oder als Wert mit der häufigsten Auftretenswahrscheinlichkeit des Messsignals SL.

Figur 4 zeigt ein beispielhaftes Blockschema einer Steuereinheit für eine Anzeigeverarbeitungseinheit 30 gemäss Figur 2. Das Messsignal SL wird dem Eingang inp eines Funktions-Blocks $F_A$ zugeführt, welcher die Anzeigefunktion $F_A(SL)$ repräsentiert. Am Ausgang out des Funktions-Blocks steht dann der Ausgabewert A zur Verfügung, beispielsweise um zur Anzeige gebracht zu werden oder um zur weiteren Verarbeitung weitergeleitet zu werden. Die Arbeitsweise des Funktions-Blocks $F_A$ kann durch folgende mathematische Formeln ausgedrückt werden. In diesem Beispiel bezeichnet die Größe h die Hälfte des Fangbereichs DSL. Der Kennwert DSL0 kann zu Beginn des Verfahrens einem Startwert entsprechen und beispielsweise den Wert Null annehmen (DSLO = 0). Im Laufe der Messungen wird dann der Kennwert DSL0 gemäss der Beschreibung in den nächsten Abschnitten verändert:

$$A^* = SL-h, \quad \text{falls } SL > DSL0 + h;$$
$$A^* = DSL0, \quad \text{falls } DSL0 - h \leq SL \leq DSL0 + h;$$
$$A^* = SL+h, \quad \text{falls } SL < DSL0 - h \text{ ist.}$$

Durch diese Formeln, wird im Wesentlichen der Verlauf der Anzeigefunktion $F_A(SL)$ und insbesondere deren Fangbereich gemäß Figur 3 beschrieben.

Zur Steuerung der Position des Fangbereichs DSL wird dem Funktions-Block $F_A$ eine weitere Schaltung hinzugefügt. Dabei wird sowohl der Eingang des Funktions-Blocks $F_A$ als auch der Ausgang des Funktions-Blocks $F_A$ mit den Eingängen eines Differenzierers verbunden. Dadurch wird im Differenzierer die Differenz zwischen dem Messsignal SL und dem Ausgabewert A ermittelt. Der Ausgang des Differenzierers ist mit einem Integrator INT verbunden um dem Integrator INT das Differenzsignal des Differenzierers zuzuführen. Im Integrator INT wird dann das Differenzsignal fortlaufend zu einem Integralwert I integriert.

Der Ausgang des Integrators INT ist mit dem Eingang eines Triggers TRIG verbunden, sodass der Integralwert I an den Trigger TRIG weitergeleitet werden kann. Im Trigger TRIG wird der Integralwert I mit einem vorgegebenen Schwellwert S verglichen. Beim Überschreiten der Schwellwertes S wird im Trigger TRIG ein Triggersignal erzeugt. Der Ausgang des Triggers TRIG ist sowohl mit dem Eingang eines ersten Operationsverstärkers als auch mit dem Eingang eines zweiten Operationsverstärkers verbunden, um die vom Trigger TRIG erzeugten Triggersignale an diese weiterzuleiten.

Im ersten Operationsverstärker wird das Triggersignal mit einem ersten Korrekturparameter k1 versehen, beispielsweise multipliziert oder verstärkt, und über eine Verbindungsleitung, welche den Ausgang des ersten Operationsverstärkers mit einem weiteren Eingang tk des Funktions-Blocks $F_A$ verbindet, dem Funktions-Block $F_A$ zugeführt. Im Funktions-Block $F_A$ bewirkt das mit dem Korrekturparameter k1 versehene Triggersignal ein Verschieben des Fangbereichs DSL und dementsprechend dessen Grenzen und dessen Kennwert DSL0 um den Wert des Korrekturparameters k1 gemäß der Zuweisung:

$$DSL1 \rightarrow DSL1 + k1;$$

$$DSL2 \rightarrow DSL2 + k1;$$

$$DSL0 \rightarrow DSL0 + k1;$$

$$A^* \rightarrow A^* + k1.$$

Im zweiten Operationsverstärker wird das Triggersignal mit einem zweiten Korrekturparameter k2 versehen und über eine Verbindungsleitung, welche den Ausgang des zweiten Operationsverstärkers mit einem zweiten Eingang des Integrators verbindet, dem Integrator INT zugeführt. Im Integrator INT bewirkt das mit dem Korrekturparameter k2 versehene Triggersignal eine Änderung des Integralwerts I um den Wert des Korrekturparameters k2 gemäß der Zuweisung:

$$I \rightarrow I - k2.$$

Das Verschieben des Fangbereichs DSL und die Änderung des Integralwerts I erfolgt gleichzeitig da beide Operationen durch das Triggersignal ausgelöst werden. Dadurch können Veränderungen rasch nachgeführt und Fluktuationen des Messsignals SL gut unterdrückt werden.

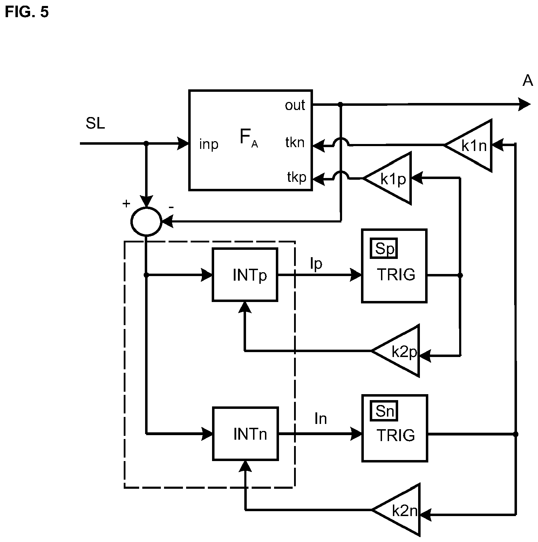

Figur 5 zeigt ein weiteres Ausführungsbeispiel der Steuereinheit gemäss Figur 4, jedoch mit einer getrennten Steuereinheit, sodass die Messwerte des Messsignals SL getrennt in positive und negative Messwerte unterteilt und diese jeweils getrennt verarbeitet werden.

Der Ausgang des Differenzierers wird in diesem Fall sowohl mit dem Eingang eines positiven Integrators INTp als auch mit dem Eingang eines negativen Integrators INTn verbunden um diesen Integratoren INTp und INTn das Differenzsignal des Differenzierers zuzuführen. In den jeweiligen Integratoren INTp und INTn wird dann das Differenzsignal zu einem positiven Integralwert Ip beziehungsweise zu einem negativen Integralwert Ip integriert. Vorzugsweise werden die Integralwert Ip und In mit folgender Zuweisung berechnet:

$$Ip \leftarrow \max(Ip+eps; 0)$$

$$In \leftarrow \max(In-eps; 0)$$

Dabei bildet die Funktion max den Maximalwert der beiden Eingabewerte und eps ist die Differenz zwischen den Werten des Messsignals und dem Ausgabewert A:

$$eps = SL-A.$$

In analoger Weise wie im Ausführungsbeispiel gemäss Figur 4 wird in einer separaten Schaltung der Integralwerte Ip an einen ersten Trigger TRIG weitergeleitet, dort mit dem positiven Schwellwerten Sp verglichen und beim Überschreiten des Schwellwerts Sp ein Triggersignal erzeugt. Das erzeugte Triggersignal wird dann sowohl mit dem Korrekturparameter k2p versehen an den Integrator INTp zurückgeführt als auch mit dem Korrekturparameter k1 p versehen an den Funktions-Block $F_A$ weitergeleitet. In gleicher Weise wird der Integralwert In an den Trigger TRIG weitergeleitet, dort mit dem negativen Schwellwerten Sn verglichen und beim Überschreiten des Schwellwerts Sn ein Triggersignal erzeugt. Analog wie zuvor beschrieben, wird das mit dem Korrekturparameter k2n versehene Triggersignal an den Integrator INTn zurückgeführt und das mit dem Korrekturparameter k1n versehene Triggersignal an den Funktions-Block $F_A$ weitergeleitet.

Zur Aufnahme der mit den Korrekturparametern k1p und k1n versehenen Signale besitzt der Funktions-Blocks $F_A$ zwei Eingänge tkp und tkn, welche mit den Ausgängen der den Korrekturparametern k1 p und k1 n entsprechenden Operationsverstärkern verbunden sind. Ein Signal am Eingang tkp bewirkt das Verschieben des Fangbereichs in eine Richtung, beispielsweise in Richtung der positiven Messwerte des Messsignals SL, während ein Signal am Eingang tkn ein Verschieben des Fangbereichs in die entgegen gesetzte Richtung bewirkt. In diesem Ausführungsbeispiel werden dann der gemeinsame Ausgabewert A* und der Fangbereich DSL wie auch der positive Integralwert Ip oder der negative Integrationswert In entsprechend folgender Zuweisung angepasst:

$$Ip > Sp: A = A + k1p; \; Ip = Ip - k2p$$

$$In > Sn: A = A - k1n; \; In = Ip - k2n$$

Die Korrekturparameter k1 p und k1 n können verschieden oder gleich gross gewählt werden. Ebenso können auch die Korrekturparameter k2p und k2n verschieden oder gleich sein. Ausserdem können auch die Schwellwerte Sp und Sn verschieden oder gleich sein.

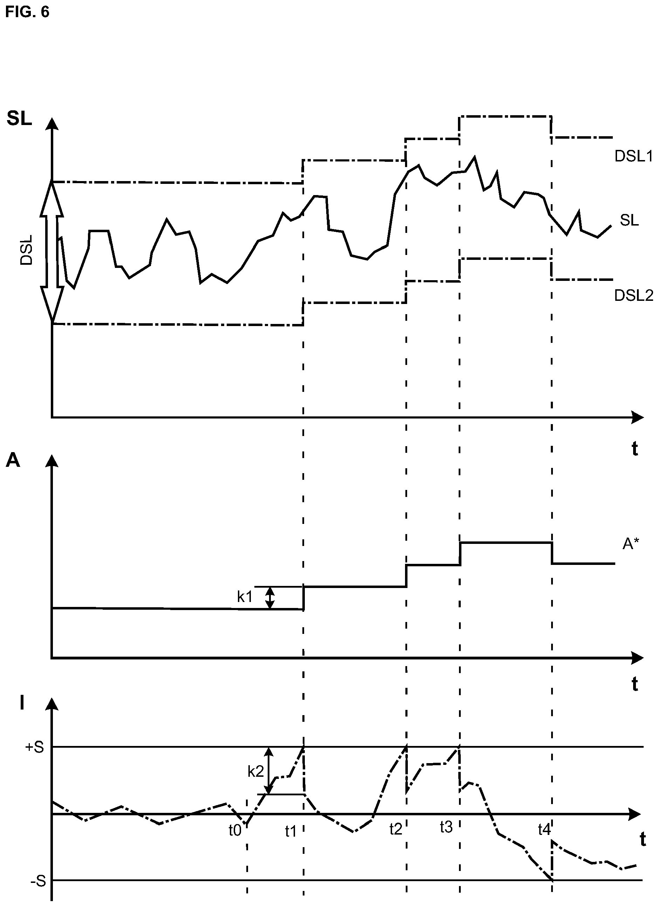

Figur 6 zeigt beispielhafte, vereinfachte Verläufe des Messsignals SL, des Fangbereichs DSL, des gemeinsamen Anzeigewerts A* und des Integralwerts I während einer Beobachtungszeit t. Das Messsignal SL zeigt anfänglich bis zu einer Zeit t0 einen im Grundmuster weitgehend konstanten Verlauf. Dabei sind dem Messsignal SL kurzzeitige Störungen oder Schwankungen überlagert. Der Fangbereich DSL, beziehungsweise dessen erste Grenze DSL1 und dessen zweite Grenze DSL2 sind jedoch so groß gewählt, dass die Störungen nicht über den Fangbereich DSL hinausgehen. Dementsprechend resultiert eine stabile Anzeige des gemeinsamen Ausgabewerts A*.

Kurz vor dem Zeitpunkt t1 steigt das Messsignal SL, beispielsweise hervorgerufen durch einen Lastwechsel, deutlich an. Mit dem Anstieg steigt auch der Integralwert I, da der Fangbereich DSL nun nicht mehr symmetrisch bezüglich des Messsignal SL liegt und somit die positiven Signalanteile des Messsignals SL überwiegen.

Im Zeitpunkt t1 übersteigt der Integralwert I den Schwellwert S, sodass der Trigger TRIG gemäss Figur 4 ein Triggersignal auslöst, welches den Fangbereich DSL um den Korrekturparameter k1 in Richtung des erhöhten Messsignals SL verschiebt und den Integralwert I um den Korrekturparameter k2 reduziert. Somit wird im Zeitpunkt t1 sowohl der Fangbereich DSL als auch die Auswertung des Messsignals SL im Wesentlichen gleichzeitig nachgeführt.

Eine analoges Nachführen wie zum Zeitpunkt t1 wiederholt sich zu den Zeitpunkten t2 und t3. Im Zeitpunkt t4 hingegen überschreitet der Integralwert einen negativen Schwellwert, sodass bei den Korrekturparametern k1 und k2 das Vorzeichen wechselt. Dementsprechend wird in diesem Fall der Fangbereich DSL um den Korrekturparameter k1 in Richtung der negativen Werte des Messsignals SL verschoben und der Integralwert I um den Korrekturparameter k2 erhöht.

Der positive Schwellwert und der negative Schwellwert können den gleichen Betrag aufweisen, sie können aber auch unterschiedlich sein. Ferner können die Korrekturparametern k1 und k2 für positive und negative Korrekturen unterschiedlich sein.

Vorzugsweise wird der Schwellwert S in Abhängigkeit der geforderten Ansprechzeit $t_a$ für einen Sprung der Anzeige um einen Schritt $A_s$ während der Dauer eines Schrittes $t_s$ gemäss folgender Formel bestimmt:

$$S = A_s * t_a / t_s.$$

Ausserdem können die Korrekturparameter k1 und k2 mit folgenden Formeln bestimmt werden:

$$k1 = DSL/n$$

$$k2 = S/n,$$

wobei n als ganzzahliger Wert die gewünschte Anzahl Schritte bezeichnet.

**Bezugszeichenliste**

| 1 | Kraftmessvorrichtung |
|---|---|
| 10 | Messumformer |
| 11 | Dehnmessstreifen |
| 20 | Vorverarbeitungseinheit |
| 30 | Anzeigeverarbeitungseinheit |
| 31 | Anzeigeeinheit |
| 32 | weitere Verarbeitungseinheit |
| A | Ausgabewert |
| Ai | allgemeiner Ausgabewert |
| A* | gemeinsamer Ausgabewert |
| $F_A$ | Anzeigefunktion, Funktionsblock |
| inp | Eingang der Anzeigefunktion |
| eps | Differenzwert |
| out | Ausgang der Anzeigefunktion |
| SL | Messsignal |

| DSL0 | Kennwert |
| SLi | allgemeiner Wert des Messsignals |
| DSL | Fangbereich |
| DSL1, DSL2 | Grenze des Fangbereichs |
| I, In, Ip | Integralwert |
| INT, INTp, INTn | Integrator |
| S, Sn, Sp | Schwellwert |
| TRIG | Trigger |
| tk, tkn, tkp | Eingang für Korrekturparameter |
| k1, k2, k1n, k2n, k1p, k2p | Korrekturparameter |

**Patentansprüche**

1. Verfahren zur Signalverarbeitung in einer elektronischen Kraftmessvorrichtung (1), insbesondere einer Waage, mit einem Messumformer (10) welcher ein zu einer einwirkenden Kraft (L) korrespondierendes Messsignal (SL) bildet, welches, gegebenenfalls via einer Vorverarbeitung, einer Anzeigefunktion ($F_A(SL)$) zugeführt wird, welche den Werten des Messsignals (SL) entsprechende Ausgabewerte (A) zuordnet, welche dann zur Anzeige gebracht oder zur weiteren Verarbeitung weitergeleitet werden, wobei der Eingabebereich der Anzeigefunktion ($F_A(SL)$) einen Fangbereich (DSL) aufweist, sodass den im Fangbereich (DSL) liegenden Werten des Messsignals (SL) durch die Anzeigefunktion ($F_A(SL)$) ein gemeinsamer Ausgabewert (A*) zugewiesen wird, **dadurch gekennzeichnet, dass** die Position des Fangbereichs (DSL) innerhalb des Eingabebereichs in Abhängigkeit des Messsignals (SL) gesteuert wird.

2. Verfahren nach Anspruch 1, **dadurch gekennzeichnet, dass** der gemeinsame Ausgabewert (A*) vorbestimmt wird, insbesondere bezüglich eines vorbestimmten Startwerts (DSL0) und/oder des Verlaufs des Messsignals (SL) während eines früheren Zeitintervalls.

3. Verfahren nach Anspruch 1 oder 2, **dadurch gekennzeichnet, dass** der Fangbereich (DSL) durch eine erste Grenze (DSL1) und eine zweite Grenze (DSL2) vom Eingabebereich abgegrenzt ist und dass bei der Steuerung des Fangbereichs (DSL) der Abstand der Grenzen (DSL1, DSL2) im Wesentlichen konstant gehalten wird.

4. Verfahren nach einem der Ansprüche 1 bis 3, **dadurch gekennzeichnet, dass** der Fangbereich (DSL) einen Kennwert (DSL0), insbesondere einen Mittenwert des Fangbereichs (DSL) aufweist, welcher die Position des Fangbereichs (DSL) charakterisiert und welcher in Abhängigkeit des Messsignals (SL) gesteuert wird.

5. Verfahren nach einem der Ansprüche 1 bis 4, **dadurch gekennzeichnet, dass** die Grösse des Fangbereichs (DSL) derart gesteuert wird, dass sie grösser als die zu erwartenden Fluktuationen des Messsignals (SL) und/oder die doppelte, insbesondere dreifache oder vierfache, Varianz des Messsignals (SL) und/oder die Auflösung der Anzeige und/oder die Verarbeitungsgenauigkeit der weiteren Verarbeitung ist.

6. Verfahren nach einem der Ansprüche 1 bis 5, **dadurch gekennzeichnet, dass** der Fangbereich (DSL) schrittweise, insbesondere mit konstanter Schrittweite entsprechend einem ersten Korrekturparameter (k1), gesteuert wird.

7. Verfahren nach einem der Ansprüche 1 bis 6, **dadurch gekennzeichnet, dass** ein zum Messsignal (SL) korrespondierender Wert gebildet, dieser mit einem Schwellwert (S, Sp, Sn) verglichen und in Abhängigkeit davon eine Positionierung des Fangbereichs (DSL) ausgelöst wird.

8. Verfahren nach einem der Ansprüche 1 bis 7, **dadurch gekennzeichnet, dass** eine Differenz zwischen dem Messsignal (SL) und dem Ausgabewert (A) gebildet wird, diese Differenz zu einem Integralwert (I, Ip, In) integriert wird, anhand welchem dann die Position des Fangbereichs (DSL) gesteuert wird.

9. Verfahren nach Anspruch 8, **dadurch gekennzeichnet, dass** der Integralwert (I, Ip, In) schrittweise, insbesondere mit konstanter Schrittweite entsprechend einem zweiten Korrekturparameter (k2, k2p, k2n), korrespondierend zu Positionsänderungen des Fangbereichs (DSL) verändert wird.

10. Verfahren nach Anspruch 8 oder 9, **dadurch gekennzeichnet, dass** der Integralwert (I, Ip, In) so verändert wird, dass der Betrag des veränderten Integralwerts (I, Ip, In) grösser als Null ist.

**11.** Verfahren nach einem der Ansprüche 8 bis 10, **dadurch gekennzeichnet, dass** die Position des Fangbereichs (DSL) im Wesentlichen gleichzeitig mit einer Anpassung des Integralwerts (I) gesteuert wird.

**12.** Verfahren nach einem der Ansprüche 8 bis 11, **dadurch gekennzeichnet, dass** der Integrator (INT) einen einer positiven Differenz entsprechenden Integralwert (Ip) und einen einer negativen Differenz entsprechenden Integralwert (In) bildet, anhand welcher dann die Position des Fangbereichs (DSL) gesteuert wird, insbesondere in jeweils entgegen gesetzte Richtungen gesteuert wird.

**13.** Verfahren nach einem der Ansprüche 8 bis 12, **dadurch gekennzeichnet, dass** durch den Integrator (INT) eine Hilfsgrösse (eps) integriert wird, welche ein den Messwerten des Messsignals (SL) entgegen gesetztes Vorzeichen aufweist.

**14.** Vorrichtung zur Signalverarbeitung für eine elektronische Kraftmessvorrichtung (1), insbesondere eine Waage mit einer Anzeigeverarbeitungseinheit (30), deren Eingang, gegebenenfalls via einer Vorverarbeitungseinheit (20), mit einem Messumformer (10) verbindbar ist um mindestens ein zu einer einwirkenden Kraft (L) korrespondierendes Messsignal (SL) zu empfangen und deren Ausgang mit einer Anzeigeeinheit (31) und/oder einer weiteren Verarbeitungseinheit (32) verbindbar ist um eine in der Anzeigeverarbeitungseinheit (30) mittels einer Anzeigefunktion ($F_A$(SL)) erzeugten Ausgabewerte (A) weiterzuleiten, wobei der Eingabebereich der Anzeigefunktion ($F_A$(SL)) einen Fangbereich (DSL) aufweist, sodass den im Fangbereich (DSL) liegenden Werten des Messsignals (SL) durch die Anzeigefunktion ($F_A$(SL)) ein gemeinsamer Ausgabewert (A*) zugewiesen wird, **dadurch gekennzeichnet, dass** die Position des Fangbereichs (DSL) innerhalb des Eingabebereichs in Abhängigkeit des Messsignals (SL) steuerbar ist.

**15.** Vorrichtung nach Anspruch 14, **dadurch gekennzeichnet, dass** die Anzeigeverarbeitungseinheit (30) einen Trigger (TRIG) aufweist, um einen zum Messsignal (SL) korrespondierenden Wert mit einem Schwellwert (S) zu vergleichen und in Abhängigkeit davon die Positionierung des Fangbereichs (DSL) auszulösen.

**16.** Vorrichtung nach Anspruch 14 oder 15, **dadurch gekennzeichnet, dass** die Anzeigeverarbeitungseinheit (30) einen Differenzierer zur Bildung einer Differenz zwischen dem Messsignal (SL) und dem Ausgabewert (A) und einen Integrator (INT) zur Integration der Differenz zu einem Integralwert (I) aufweist, welcher dann zur Steuerung der Position des Fangbereichs (DSL) verwendbar ist.

**17.** Programm ausführbar auf einer Signalverarbeitungseinheit, insbesondere einer Anzeigeverarbeitungseinheit (30) oder einer Recheneinheit, zur Berechnung eines Ausgabewerts (A) nach einem Verfahren gemäss einem der Ansprüche 1 bis 13.

**Claims**

**1.** A method for processing signals in an electronic weighing measuring device (1), in particular a scale, having a measurement transducer (10) that generates a measurement signal (SL), which corresponds to a force (L) acting on the measurement transducer and which is fed, optionally by way of a pre-processing stage, to a display function ($F_A$(SL)), which assigns output values (A) corresponding to the values of the measurement signal (SL), which are then displayed or sent on for further processing, the input range of the display function ($F_A$(SL)) including a capture range (DSL), so that the values of the measurement signal (SL) that lie within the capture range (DSL) are assigned a common output value (A*) by the display function ($F_A$(SL)), **characterized in that** the position of the capture range (DSL) within the input range is controlled dependent upon the measurement signal (SL).

**2.** The method according to Claim 1, **characterized in that** the common output value (A*) is predefined, in particular with respect to a predefined starting value (DSL0) and/or the profile of the measurement signal (SL) during an earlier time interval.

**3.** The method according to Claim 1 or 2, **characterized in that** the capture range (DSL) is delimited from the input range by a first boundary (DSL1) and a second boundary (DSL2), and **in that** in the control of the capture range (DSL), the interval between the boundaries (DSL1, DSL2) is kept substantially constant.

**4.** The method according to any of Claims 1 to 3, **characterized in that** the capture range (DSL) includes a characteristic value (DSL0), in particular a mid-point value of the capture range (DSL), which characterizes the position of the capture range (DSL) and which is controlled dependent upon the measurement signal (SL).

5. The method according to any of Claims 1 to 4, **characterized in that** the size of the capture range (DSL) is controlled in such a way that it is wider than the expected fluctuations in the measurement signal (SL) and/or is twice, more particularly three times or four times the variance of the measurement signal (SL) and/or the resolution of the display and/or the processing accuracy of the further processing step.

6. The method according to any of Claims 1 to 5, **characterized in that** the capture range (DSL) is controlled in a stepwise manner, in particular with a constant step size that corresponds to a first correction parameter (k1).

7. The method according to any of Claims 1 to 6, **characterized in that** a value that corresponds to the measurement signal (SL) is generated, which is then compared with a threshold value (S, Sp, Sn), and depending upon the result of the comparing step, a positioning of the capture range (DSL) is triggered.

8. The method according to any of Claims 1 to 7, **characterized in that** the difference between the measurement signal (SL) and the output value (A) is determined, this difference is integrated to form an integral value (I, IP, In), and based on this integral value, the position of the capture range (DSL) is then controlled.

9. The method according to Claim 8, **characterized in that** the integral value (I, Ip, In) is modified in a stepwise manner, in particular with a constant step size in accordance with a second correction parameter (k2, k2p, k2n), corresponding to position changes of the capture range (DSL).

10. The method according to Claim 8 or 9, **characterized in that** the integral value (I, Ip, In) is modified in such a way that the amount of the modified integral value (I, Ip, In) is greater than zero.

11. The method according to any of Claims 8 to 10, **characterized in that** the position of the capture range (DSL) is controlled substantially simultaneously with the adjustment of the integral value (I).

12. The method according to any of Claims 8 to 11, **characterized in that** the integrator (INT) generates an integral value (Ip) that corresponds to a positive difference and an integral value (In) that corresponds to a negative difference, which are then used as the basis for controlling the position of the capture range (DSL), in particular in opposite directions.

13. The method according to any of Claims 8 to 12, **characterized in that** the integrator (INT) integrates an auxiliary parameter (eps), the sign of which is opposite that of the measured values for the measurement signal (SL).

14. A device for processing signals for an electronic weighing measuring device (1), in particular a scale, comprising a display processing unit (30), the input of which can be connected to a measurement transducer (10), optionally by way of a pre-processing unit (20), in order to receive at least one measurement signal (SL) that corresponds to a force (L) acting on the measurement transducer, and the output of which can be connected to a display unit (31) and/or to a further processing unit (32), to enable output values (A) generated in the display processing unit (30) by means of a display function ($F_A(SL)$) to be forwarded, the input range of the display function ($F_A(SL)$) including a capture range (DSL), so that the values of the measurement signal (SL) that lie within the capture range (DSL) are assigned a common output value (A*) by the display function ($F_A(SL)$), **characterized in that** the position of the capture range (DSL) can be controlled within the input range dependent upon the measurement signal (SL).

15. The device according to Claim 14, **characterized in that** the display processing unit (30) includes a trigger (TRIG) for comparing a value that corresponds to the measurement signal (SL) with a threshold value (S) and, depending on the result of this comparison, triggering the positioning of the capture range (DSL).

16. The device according to Claim 14 or 15, **characterized in that** the display processing unit (30) includes a difference calculator for determining the difference between the measurement signal (SL) and the output value (A), and an integrator (INT) for integrating the difference to form an integral value (I), which can then be used for controlling the position of the capture range (DSL).

17. A program that can be run on a signal processing unit, in particular on a display processing unit (30) or a computing unit, for calculating an output value (A) according to a method as specified in any of Claims 1 to 13.

**Revendications**

1. Procédé de traitement du signal dans un dispositif de mesure de force électronique (1), en particulier une balance, avec un convertisseur de mesure (10) qui forme un signal de mesure (SL) correspondant à une force appliquée (L), qui est amené à une fonction d'affichage ($F_A$(SL)), le cas échéant via un prétraitement, qui affecte des valeurs de sortie (A) correspondantes aux valeurs du signal de mesure (SL), qui sont alors affichées ou transmises pour le traitement ultérieur, dans lequel la plage d'entrée de la fonction d'affichage ($F_A$(SL)) présente une plage de capture (DSL), si bien qu'une valeur de sortie commune (A*) est attribuée aux valeurs du signal de mesure (SL) se trouvant dans la plage de capture (DSL) par la fonction d'affichage ($F_A$(SL)), **caractérisé en ce que** la position de la plage de capture (DSL) est commandée à l'intérieur de la plage d'entrée en fonction du signal de mesure (SL).

2. Procédé selon la revendication 1, **caractérisé en ce que** la valeur de sortie commune (A*) est prédéterminée, en particulier par rapport à une valeur de départ (DSL0) prédéterminée et/ou à l'allure du signal de mesure (SL) pendant un intervalle de temps antérieur.

3. Procédé selon la revendication 1 ou 2, **caractérisé en ce que** la plage de capture (DSL) est délimitée de la plage d'entrée par une première limite (DSL1) et une deuxième limite (DSL2), et que la distance des limites (DSL1, DSL2) est maintenue sensiblement constante lors de la commande de la plage de capture (DSL).

4. Procédé selon l'une quelconque des revendications 1 à 3, **caractérisé en ce que** la plage de capture (DSL) présente une valeur caractéristique (DSL0), en particulier une valeur centrale de la plage de capture (DSL), qui caractérise la position de la plage de capture (DSL) et qui est commandée en fonction du signal de mesure (SL).

5. Procédé selon l'une quelconque des revendications 1 à 4, **caractérisé en ce que** la taille de la plage de capture (DSL) est commandée de telle sorte qu'elle est plus grande que les fluctuations attendues du signal de mesure (SL) et/ou la double, en particulier triple ou quadruple, variance du signal de mesure (SL) et/ou la résolution de l'affichage et/ou la précision de traitement du traitement ultérieur.

6. Procédé selon l'une quelconque des revendications 1 à 5, **caractérisé en ce que** la plage de capture (DSL) est commandée progressivement, en particulier avec un incrément constant en fonction d'un premier paramètre de correction (k1).

7. Procédé selon l'une quelconque des revendications 1 à 6, **caractérisé en ce qu'**une valeur correspondant au signal de mesure (SL) est formée, celle-ci est comparée avec une valeur seuil (S, Sp, Sn) et en fonction de cela, un positionnement de la plage de capture (DSL) est déclenché.

8. Procédé selon l'une quelconque des revendications 1 à 7, **caractérisé en ce qu'**une différence entre le signal de mesure (SL) et la valeur de sortie (A) est formée, cette différence est intégrée en une valeur intégrale (I, Ip, In), à l'aide de laquelle la position de la plage de capture (DSL) est alors commandée.

9. Procédé selon la revendication 8, **caractérisé en ce que** la valeur intégrale (I, Ip, In) est modifiée progressivement, en particulier avec un incrément constant en fonction d'un deuxième paramètre de correction (k2, k2p, k2n), de manière correspondante à des changements de position de la plage de capture (DSL).

10. Procédé selon la revendication 8 ou 9, **caractérisé en ce que** la valeur intégrale (I, Ip, In) est modifiée de telle sorte que la valeur de la valeur intégrale modifiée (I, Ip, In) est supérieure à zéro.

11. Procédé selon l'une quelconque des revendications 8 à 10, **caractérisé en ce que** la position de la plage de capture (DSL) est commandée sensiblement en même temps qu'une adaptation de la valeur intégrale (I).

12. Procédé selon l'une quelconque des revendications 8 à 11, **caractérisé en ce que** l'intégrateur (INT) forme une valeur intégrale (Ip) correspondant à une différence positive et une valeur intégrale (In) correspondant à une différence négative, à l'aide desquelles la position de la plage de capture (DSL) est alors commandée, en particulier commandée dans des directions respectivement opposées.

13. Procédé selon l'une quelconque des revendications 8 à 12, **caractérisé en ce qu'**une grandeur auxiliaire (eps), qui présente un signe algébrique opposé aux valeurs de mesure du signal de mesure (SL), est intégrée par l'intégrateur (INT).

**14.** Dispositif de traitement du signal pour un dispositif de mesure de force électronique (1), en particulier une balance avec une unité de traitement d'affichage (30), dont l'entrée peut être reliée à un convertisseur de mesure (10), le cas échéant via une unité de prétraitement (20), pour recevoir au moins un signal de mesure (SL) correspondant à une force appliquée (L) et dont la sortie peut être reliée à une unité d'affichage (31) et/ou à une autre unité de traitement (32) pour transmettre des valeurs de sortie (A) générées dans l'unité de traitement d'affichage (30) au moyen d'une fonction d'affichage ($F_A$(SL)), dans lequel la plage d'entrée de la fonction d'affichage ($F_A$(SL)) présente une plage de capture (DSL), si bien qu'une valeur de sortie commune (A*) est attribuée aux valeurs du signal de mesure (SL) se trouvant dans la plage de capture (DSL) par la fonction d'affichage ($F_A$(SL)), **caractérisé en ce que** la position de la plage de capture (DSL) peut être commandée à l'intérieur de la plage d'entrée en fonction du signal de mesure (SL).

**15.** Dispositif selon la revendication 14, **caractérisé en ce que** l'unité de traitement d'affichage (30) présente un déclencheur (TRIG) pour comparer une valeur correspondant au signal de mesure (SL) avec une valeur seuil (S) et déclencher, en fonction de cela, le positionnement de la plage de capture (DSL).

**16.** Dispositif selon la revendication 14 ou 15, **caractérisé en ce que** l'unité de traitement d'affichage (30) présente un différenciateur pour la formation d'une différence entre le signal de mesure (SL) et la valeur de sortie (A) et un intégrateur (INT) pour l'intégration de la différence en une valeur intégrale (I), qui peut alors être utilisée pour la commande de la position de la plage de capture (DSL).

**17.** Programme exécutable sur une unité de traitement du signal, en particulier une unité de traitement d'affichage (30) ou une unité de calcul, pour le calcul d'une valeur de sortie (A) d'après un procédé selon l'une quelconque des revendications 1 à 13.

**FIG. 1**

**FIG. 2**

FIG. 3

FIG. 4

FIG. 5

**FIG. 6**

EP 2 138 812 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3826319 A
- DE 102005021547

- US 4153122 A
- DE 2949195